# EUROPÄISCHE PATENTSCHRIFT

(11) **EP 3 695 761 B1**
(45) Veröffentlichungstag und Bekanntmachung des Hinweises auf die Patenterteilung: **07.09.2022**
(21) Anmeldenummer: 19207866.5
(22) Anmeldetag: 08.11.2019
(51) Int. Cl.: A47J 37/06, A47J 37/07

(54) **GRILLGERÄT MIT REFLEKTORSCHALE**
GRILL DEVICE COMPRISING A REFLECTOR TRAY
GRILL POURVU DE CUVE DE RÉFLECTEUR

(30) Priorität: 14.02.2019 DE 202019100846 U; 12.06.2019 DE 102019115995
(43) Veröffentlichungstag der Anmeldung: 19.08.2020
(73) Patentinhaber: Severin Elektrogeräte GmbH, 59846 Sundern (DE)
(72) Erfinder: EICKELMANN, Thomas, 59846 Sundern (DE); LU, David, Shajing, Baoan, Shenzhen (CN)
(74) Vertreter: Köchling, Conrad-Joachim

(56) Entgegenhaltungen:
- DE-A1- 4 206 453
- DE-U1-202011 102 903
- US-A- 3 444 805
- US-A- 4 862 795
- US-A1- 2018 220 843

## Beschreibung

Elektrisches Grillgerät mit Reflektorschale Die Erfindung betrifft ein elektrisches Grillgerät mit Reflektorschale, wobei das Grillgerät eine Oberseite aufweist, die von einem Grillrost mit elektrischer Grilleinheit oder nur einer elektrischen Grilleinheit gebildet ist, sowie eine wannenartige Reflektorschale, die unter der Grilleinheit positioniert ist, wobei die Reflektorschale einen zum Grilleinheit offenen Innenraum als Wasseraufnahme aufweist und eine mehrfach gewinkelte Bodenfläche als Reflektoren.

Grillgeräte dieser Art sind im Stand der Technik vielfach bekannt. Ein solches Grillgerät weist im Regelfall ein schalenförmiges Gehäuseunterteil auf, auf welches ein Grillrost aufgelegt ist. Zwischen dem Boden des Unterteils und dem Grillrost ist im Regelfall eine elektrische Grilleinheit angeordnet, die zum Erhitzen des Grillgutes dient, welches auf den Grillrost aufgelegt wird. Das Grillgut, welches mit dem Grillgerät gegrillt werden soll, ist häufig mit Soßen oder dergleichen versehen, was dazu führt, dass beim Grillen Fett oder auch Soßenbestandteile abtropfen und das Unterteil der Schale verschmutzen. Diese abtropfenden Bestandteile backen dann an der Grillschale an, was die Reinigung schwierig macht. Im Stand der Technik sind auch Grillgeräte bekannt, die einen Metallreflektor aufweisen, damit die von dem elektrischen Grillgerät abgegebene Hitze zurückgestrahlt wird und das Grillgut somit zusätzlich erhitzt wird. Auch ist es bekannt, einen solchen Metallreflektor auf einer Wasseroberfläche aufschwimmen zu lassen, die durch Wasser gebildet ist, welches in das Geräteunterteil eingebracht ist. Nachteilig ist hierbei, dass der Metallreflektor durch abtropfendes Fett verschmutzt wird und somit dessen Wirkung herabgesetzt wird, wobei zudem die Reinigung erschwert ist, weil das abtropfende Fett und dergleichen auf dem Reflektor festbrennt.

Durch das Wasser wird aber verhindert, dass das Grillgerät als solches zu heiß wird und somit wird die Gefahr gemindert, dass sich der Benutzer durch Berühren der Geräteaußenhaut verbrennt.

Andere Grillgeräte, die gelochte oder geschlitzte Tropfpfannen aufweisen, aber zur Aufnahme von Wasser nicht geeignet sind, sind aus der US 3,444,805 A, der US 2018/0220843 A1 und der US 4.862,795 A bekannt.

Zudem sind aus der DE 42 06 453 A1 und der DE 20 2011 102 903 U1 Schalen oder Grillpfannen zum Braten und Grillen von Lebensmitteln bekannt. Diese schalenförmigen Behältnisse haben eine wellenförmige Bodenausformung, die mit Löchern versehen sind, um eintropfende Säfte oder Fette zu sammeln oder auslaufen zu lassen. Diese Grillpfannen werden in der Weise benutzt, dass in die Grillpfanne selbst entsprechende Lebensmittel eingelegt werden, die dann beispielsweise durch eine Holzkohlefeuerung erhitzt werden und gegart werden, die unterhalb des Bodens der Grillpfanne oder Grillschale angeordnet ist.

Ob und in wie weit bei solchen Grillschalen eine Reflektionswirkung erreicht wird, ist fraglich. Dies ist aber auch nicht das Ziel dieser Grillpfannen oder Garschalen, sondern diese sollen anstelle einer Bratpfanne oder einer Kocheinrichtung vornehmlich auf einem Holzkohlegrill erhitzt und benutzt werden Ausgehend von diesem Stand der Technik liegt der Erfindung die Aufgabe zugrunde, ein elektrisches Grillgerät mit Reflektorschale zu schaffen, bei dem das Anbrennen von abtropfenden Fettbestandteilen und dergleichen an der Reflektorschale vermieden oder zumindest vermindert wird und dennoch eine gute Reflektorleistung des Reflektors über die Gebrauchsdauer sichergestellt ist.

Zur Lösung dieser Aufgabe schlägt die Erfindung vor, dass die mehrfach gewinkelte Bodenfläche aus vom Boden abragenden dachähnlichen Flächen gebildet ist und die dachähnlichen Flächen Wasserdurchströmbereiche bilden, sodass diese mindestens bodennah oder auch nahe einer umlaufenden Wandung der Reflektorschale miteinander kommunizieren, derart dass bei mit Wasser gefüllter Reflektorschale deren Bodenfläche fast überall von Wasser abgedeckt ist, mit Ausnahme der sich aus der eingefüllten Wassermenge hervorhebenden Bereiche der dachähnlichen Flächen, die über den Wasserstand vorragen und die eigentlichen Reflektionszonen bilden.

Gemäß der Erfindung ist die Bodenfläche der Reflektorschale mit einer Vielzahl von vom Boden abragenden dachähnlichen Flächen ausgestattet. Diese dachähnlichen Flächen bilden mit den übrigen Bestandteilen der Reflektorschale Wasserdurchströmbereiche, und zwar an den bodennahen Enden der dachähnlichen Flächen und auch an der umlaufenden Wandung der Reflektorschale, die miteinander kommunizieren. Hierdurch wird erreicht, dass dann, wenn Wasser in die Reflektorschale eingefüllt wird, das Wasser sich über die gesamte Reflektorschale bis in den Randbereich und in die Kantenbereiche der Anschlusszonen der dachähnlichen Flächen verteilt, sodass weitestgehend alle Bereiche der Reflektorschale durch Wasser abgedeckt sind, mit Ausnahme der vorragenden dachähnlichen Flächen, die als Reflektor zur Verfügung stehen und eine Beschleunigung des Grillverfahrens zur Folge haben. Abtropfendes Fett oder dergleichen kann auf die dachähnlichen Flächen tropfen und von diesen in den Bereich der Wasserdurchströmbereiche abfließen, sodass diese Bestandteile dann überwiegend auf dem Wasser schwimmen oder zumindest nicht an Reflektorflächen festbrennen. Insbesondere in Kantenbereichen und Randbereichen ist ein Anbacken von abtropfenden Fetten oder dergleichen vermieden, weil in diesen Bereichen die Wasserdurchströmbereiche vorgesehen sind. Dadurch, dass die Wasserdurchströmbereiche kommunizierend miteinander verbunden sind, reicht es aus, wenn Wasser an einer Stelle der Reflektorschale in diese eingefüllt wird. Das Wasser kann sich dann aufgrund der kommunizierenden Wasserdurchströmbereiche über die gesamte Reflektorschale verteilen, sodass nur die dachähnlichen Flächen ähnlich wie Bergvorsprünge aus der vom Wasser abgedeckten Ebene hervorragen und als Reflektoren zur Verfügung stehen.

Besonders bevorzugt ist dabei vorgesehen, dass die dachähnlichen Flächen voneinander beabstandete zueinander parallele Firstlinien bilden und deren Giebelflächen durch Schrägflächen nach Art eines Walmdaches gebildet sind, wobei die Fußlinien der dachähnlichen Flächen und der Schrägflächen von benachbarten Dachflächen und/oder der umlaufenden Wandung der Reflektorschale in einer gemeinsamen, durch die Bodenfläche der Reflektorschale aufgespannten Ebene liegen.

Im Prinzip ist hierbei im Boden der Reflektorschale eine Anordnung von parallel zueinander gerichteten Walmdächern vorgesehen, die aus dem Material der Reflektorschale geformt sind. Durch die Form dieser Dächer wird erreicht, dass Wasserdurchströmbereiche an allen Kanten der jeweiligen Dachform, in denen sie in die Bodenfläche übergehen, gebildet sind, wobei die benachbarten Wasserdurchströmbereiche miteinander durch die zurückgesetzten Flächen verbunden sind, sodass eine durchgehende Wasserfläche zur Verfügung steht, deren Wasser nur an einer Stelle der Reflektorschale eingefüllt werden muss.

Besonders bevorzugt ist vorgesehen, dass die Reflektorschale aus blankem Edelstahl oder aus anderem hochreflektierendem Material, insbesondere Metall besteht.

Hierdurch wird die Reflektionswirkung verbessert und es wird zudem eine erleichterte Reinigung der Reflektorschale ermöglicht, da die Reinigung von aus Edelstahl bestehenden Schalen relativ einfach mit üblichen Reinigungsmitteln möglich ist.

Zudem ist eine bevorzugte Weiterbildung darin zu sehen, dass die Reflektorschale samt dachähnlichen Flächen einstückig aus Blech tiefgezogen ist.

Gemäß dieser Ausgestaltung kann die Reflektorschale aus einem flachen Blechzuschnitt im Wege des Tiefziehens hergestellt werden, wobei in einem entsprechenden Arbeitsgang sowohl der umlaufende Rand, als auch die dachähnlichen Flächen, einstückig aus dem Blechteil tiefgezogen werden.

Eine Alternative und dennoch ähnliche Ausgestaltung wird darin gesehen, dass die dachähnlichen Flächen inselartig aus der Bodenebene der Reflektorschale vorragen und von im Bodenniveau liegende Wasserdurchströmbereichen allseitig umgeben sind.

Die dachähnlichen Flächen können beispielsweise runde vorspringende Inseln bilden oder auch rechteckige oder anders dimensionierte Vorsprünge bilden. Wesentlich ist nur, dass möglichst keine Bestandteile der dachähnlichen Flächen horizontal gerichtet sind, damit sich darauf keine Reste von abtropfendem Fett oder dergleichen absetzen können, sondern die Flächen sollen schräg gerichtet sein, sodass auftropfende Fette oder dergleichen zum Boden der Schale hin abfließen können. Zudem ist wesentlich, dass sämtliche inselartig vorgesehenen Gebilde von Wasserdurchströmbereichen umgeben sind, sodass sichergestellt ist, dass nur das Einfüllen an einer Stelle der Reflektorschale dazu führt, dass sich das Wasser über die Gesamtfläche der Reflektorschale mit Ausnahme der vorragenden Bereiche verteilt.

Bevorzugt ist zudem vorgesehen, dass die Firstlinien der dachähnlichen Flächen parallel zu einer Seitenrandkante der im Wesentlichen rechteckigen Wannenform gerichtet verlaufen, wobei die randnahen Bereiche der dachähnlichen Flächen steil von der Bodenfläche abragen, vorzugsweise in einem Winkel von nahe 90°.

Die Besonderheit dieser Ausbildung besteht darin, dass die randnahen Bereiche der dachähnlichen Flächen relativ steil von der Bodenfläche abragen. Diese Bereiche tragen zur Reflektion kaum bei, sodass die von der elektrischen Grilleinheit abgegebene Strahlung hier nicht reflektiert wird. Die Reflektionswirkung wird aber dadurch verbessert, dass nur die randnahen Bereiche relativ steil von der Bodenfläche abragen, während die übrigen Bereiche der dachähnlichen Flächen relativ schwach geneigt sind, sodass sie einerseits zwar das Abfließen von auftropfendem Fett oder dergleichen ermöglichen, andererseits aber eine Reflektion der Strahlen in vorzüglicher Weise ermöglichen, die von der elektrischen Grilleinheit abgegeben werden, die sich oberhalb der Dachflächen erstreckt.

Bevorzugt ist dabei vorgesehen, dass die dachähnlichen Flächen, vorzugsweise mit Ausnahme der randnahen Flächen, im Winkel von 20° bis 35° von der Bodenfläche abragen.

Vorzugsweise ist vorgesehen, dass die dachähnlichen Flächen zentrisch zu Heizstäben der elektrischen Grilleinheit ausgerichtet und unter diesen angeordnet sind, wobei sie vorzugsweise mit ihren Firstlinien oder dergleichen Bereichen mit geringem Abstand von dem jeweiligen Heizstab angeordnet sind.

Ausführungsbeispiele der Erfindung sind in den Zeichnungen dargestellt und im Folgenden näher beschrieben.

Es zeigt:
- Figur 1: eine erfindungsgemäße Reflektorschale in isometrischer Ansicht von schräg oben gesehen;
- Figur 2: die Reflektorschale im Schnitt A-A der Figur 1 gesehen;
- Figur 3: die Reflektorschale im Schnitt B-B der Figur 1 gesehen;
- Figur 4: ein Schnitt durch eine Reflektorschale samt darüber befindlicher Grilleinheit und Grillrost;
- Figur 5: eine bevorzugte Variante in gleicher Ansicht;

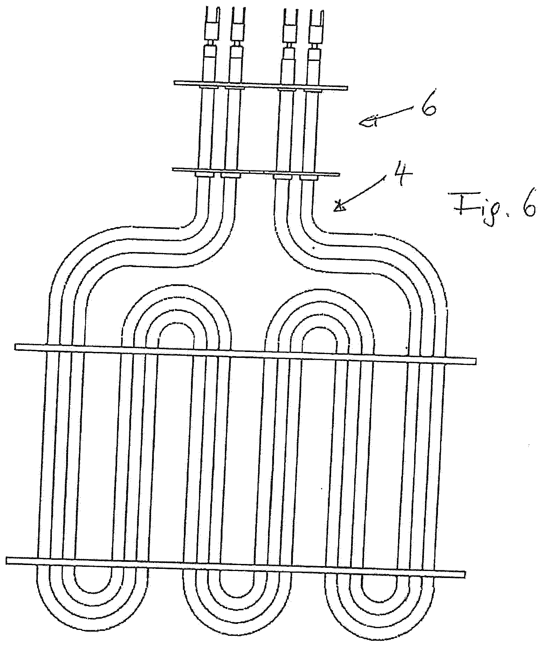

- Figur 6: eine beispielhafte elektrische Grilleinheit in Draufsicht gesehen.

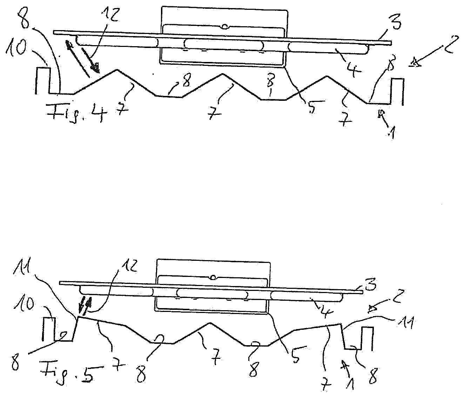

In der Zeichnung ist eine Reflektorschale 1 für ein elektrisches Grillgerät gezeigt. In den Figuren 4 und 5 ist schematisch ein komplettes Grillgerät 2 mit Reflektorschale 1 gezeigt, wobei das Grillgerät 2 eine Oberseite aufweist, die von einem Grillrost 3 gebildet ist, wobei unter dem Grillrost 3 eine elektrische Grilleinheit 4 angeordnet ist. Die Reflektorschale 1 ist im Wesentlichen wannenförmig ausgebildet und unter der Grilleinheit 4 positioniert. Die Reflektorschale 1 weist einen zur Grilleinheit 4 hin offenen Innenraum als Wasseraufnahme auf und eine mehrfach gewinkelte Bodenfläche als Reflektor. An einem Randbereich weist die Reflektorschale 1 einen Ausschnitt 5 auf, der zur Aufnahme von elektrischen Anschlussteilen 6 der elektrischen Grilleinheit 4 dient.

Die Bodenfläche der Reflektorschale 1 ist durch mehrfach gewinkelte, vom Boden abragende dachähnliche Flächen 7 gebildet. Diese dachähnlichen Flächen 7 bilden Wasserdurchströmbereiche 8. In die Reflektorschale 1 wird beim Gebrauch an beliebiger Stelle von oben Wasser eingefüllt, und zwar bis zu einer Maximalmarkierung 9. Wenn das Gerät also in Betrieb genommen wird, ist die Bodenfläche fast überall von Wasser abgedeckt, mit Ausnahme der sich aus der eingefüllten Wassermenge hervorhebenden Bereiche der dachähnlichen Flächen 7, die also über dem Wasserstand vorragen und die eigentlichen Reflektionszonen bilden. Die Wasserdurchströmbereiche sind im Wesentlichen bodennah in der Reflektorschale 1 vorgesehen, wobei alle vorgesehenen Wasserdurchströmbereiche 8 miteinander kommunizieren, sodass auch bei Einfüllen von Wasser an einer einzigen Stelle der Reflektorschale 1 ein gleichmäßiger Wasserstand in der Reflektorschale 1 sichergestellt ist. Bei der Benutzung tropft Fett oder dergleichen vom Grillgut ab, welches auf dem Grillrost 3 aufliegt. Diese abtropfenden Bestandteile könnten die Reflektorflächen verunreinigen. Durch die dachähnliche Ausbildung dieser Flächen 7 wird erreicht, dass auftropfendes Fett oder dergleichen nach unten in die Grillschale abfließen kann und dann in den bestehenden Wasserstand gleitet. Ein Festbrennen wird vermieden und eine Verunreinigung der wesentlichen Reflektorflächen, die durch die dachähnlichen Flächen 7 gebildet sind, wird weitestgehend verhindert.

Im Ausführungsbeispiel sind die dachähnlichen Flächen 7 durch voneinander beabstandete, zueinander parallele Firstlinien gebildet, wobei deren Giebelflächen sowohl seitlich, als auch endseitig nach Art eines Walmdaches gebildet sind. Die Fußlinien dieser dachähnlichen Flächen 7 und der Schrägflächen von den benachbarten Dachflächen sowie auch die Fußlinien der umlaufenden Wandung der Reflektorschale 1 liegen in einer gemeinsamen, durch die Bodenfläche der Reflektorschale 1 aufgespannten Ebene, die insgesamt bei der Benutzung von Wasser überdeckt ist.

Vorzugsweise besteht die Reflektorschale 1 aus blankem Edelstahl, wobei weiterhin vorzugsweise die Reflektorschale 1 samt der dachähnlichen Flächen 7 einstückig aus Blech tiefgezogen ist.

Die dachähnlichen Flächen 7 ragen inselartig aus der Bodenebene der Reflektorschale 1 vor und sind von den im Boden liegenden Wasserdurchströmbereichen 8 allseitig umgeben.

Bei der Ausführungsform, die in Figur 4 im Schnitt gezeigt ist, sind die dachähnlichen Flächen 7 relativ schwach geneigt. Hierdurch entsteht im Randbereich, also am Rand 10 der Reflektorschale 1 ein Reflektor, von dem Strahlen nach außenseitig wegreflektiert werden. Diese Strahlen sind für die Aufbereitung des Grillgutes verloren.

Um hier noch eine Verbesserung zu schaffen, ist bei der Ausführungsform nach Figur 5 eine Anordnung vorgesehen, bei der die randnahen Bereiche 11 der dachähnlichen Flächen 7 steil von der Bodenfläche abragen, im Ausführungsbeispiel in einem Winkel von nahezu 90°. Der entsprechende Reflektionsgang ist durch Pfeile 12 verdeutlicht. Durch diese Anordnung wird erreicht, dass noch ein größerer Teil der dachähnlichen Flächen 7 zur Reflektion von Strahlen zur Verfügung steht, die von der elektrischen Grilleinheit 4 erzeugt werden, sodass die Wirkung hierdurch noch verbessert wird, ohne aber das Prinzip der Erfindung zu verlassen.

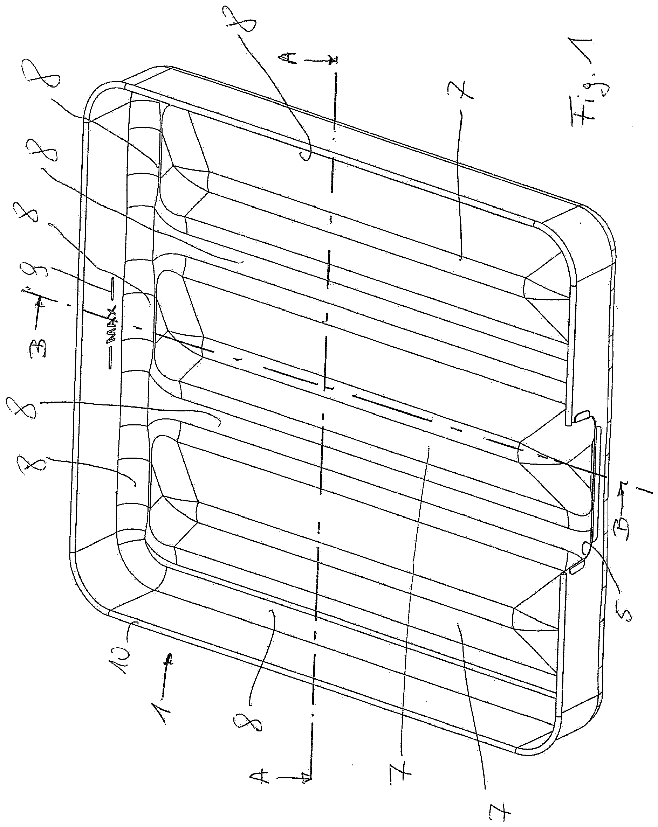

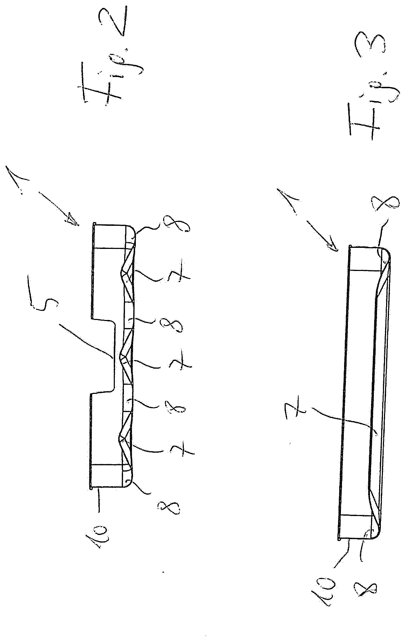

Die übrigen dachähnlichen Flächen 7, mit Ausnahme der randnahmen Flächen, sind in einem Winkel von beispielsweise 20° bis 35° relaktiv von der Bodenfläche abragend vorgesehen, wie in den Ausführungsbeispielen gemäß Figur 1 bis 5 gezeigt ist.

Eine solche Neigung reicht aus, um auftropfende Fette oder dergleichen in Richtung auf den Boden der Reflektorschale abfließen zu lassen, wobei zudem die Reflektionswirkung dieser dachähnlichen Flächen 7 hierdurch verbessert ist und somit die Grillzeit verkürzt werden kann.

### Bezugszeichenliste

- 1.: Reflektorschale
- 2.: Grillgerät
- 3.: Grillrost
- 4.: elektrische Grilleinheit
- 5.: Ausschnitt
- 6.: Anschlussteile
- 7.: dachähnliche Flächen
- 8.: Wasserdurchströmbereiche
- 9.: maximale Markierung
- 10.: Rand von 1
- 11.: randnahe Bereiche von 7
- 12.: Reflexionsstrahlen

## Patentansprüche

1. Elektrisches Grillgerät (2) mit Reflektorschale (1), wobei das Grillgerät eine Oberseite aufweist, die von einem Grillrost (3) mit elektrischer Grilleinheit (4) oder nur einer elektrischen Grilleinheit (4) gebildet ist, sowie eine wannenartige Reflektorschale (1), die unter der Grilleinheit (4) positioniert ist, wobei die Reflektorschale (1) einen zur Grilleinheit (4) offenen Innenraum als Wasseraufnahme aufweist und eine mehrfach gewinkelte Bodenfläche als Reflektoren, wobei
die
mehrfach gewinkelte Bodenfläche aus vom Boden abragenden dachähnlichen Flächen (7) gebildet ist und die dachähnlichen Flächen (7) Wasserdurchströmbereiche (8) bilden, sodass diese mindestens bodennah oder auch nahe einer umlaufenden Wandung (10) der Reflektorschale (1) miteinander kommunizieren, derart dass bei mit Wasser gefüllter Reflektorschale (1) deren Bodenfläche fast überall von Wasser abgedeckt ist, mit Ausnahme der sich aus der eingefüllten Wassermenge hervorhebenden Bereiche der dachähnlichen Flächen (7), die über den Wasserstand vorragen und die eigentlichen Reflektionszonen bilden.

2. Grillgerät (2) nach Anspruch 1, **dadurch gekennzeichnet, dass** die dachähnlichen Flächen (7) voneinander beabstandete zueinander parallele Firstlinien bilden und deren Giebelflächen durch Schrägflächen nach Art eines Walmdaches gebildet sind, wobei die Fußlinien der dachähnlichen Flächen (7) und der Schrägflächen von benachbarten Dachflächen und/oder der umlaufenden Wandung (10) der Reflektorschale (1) in einer gemeinsamen, durch die Bodenfläche der Reflektorschale (1) aufgespannten Ebene liegen.

3. Grillgerät (2) nach Anspruch 1 oder 2, **dadurch gekennzeichnet, dass** die Reflektorschale (1) aus blankem Edelstahl oder aus anderem hochreflektierendem Material, insbesondere Metall besteht.

4. Grillgerät (2) nach einem der Ansprüche 1 bis 3, **dadurch gekennzeichnet, dass** die Reflektorschale (1) samt dachähnlichen Flächen (7) einstückig aus Blech tiefgezogen ist.

5. Grillgerät (2) nach einem der Ansprüche 1 bis 4, **dadurch gekennzeichnet, dass** die dachähnlichen Flächen (7) inselartig aus der Bodenebene der Reflektorschale (1) vorragen und von im Bodenniveau liegenden Wasserdurchströmbereichen (8) allseitig umgeben sind.

6. Grillgerät (2) nach einem der Ansprüche 1 bis 5, **dadurch gekennzeichnet, dass** die Firstlinien der dachähnlichen Flächen (7) parallel zu einer Seitenrandkante (10) der im Wesentlichen rechteckigen Wannenform gerichtet verlaufen, wobei die randnahen Bereiche (11) der dachähnlichen Flächen (7) steil von der Bodenfläche abragen, vorzugsweise in einem Winkel von nahe 90°.

7. Grillgerät (2) nach einem der Ansprüche 1 bis 6, **dadurch gekennzeichnet, dass** die dachähnlichen Flächen (7), vorzugsweise mit Ausnahme der randnahen Flächen (11), im Winkel von 20° bis 35° von der Bodenfläche abragen.

8. Grillgerät (2) nach einem der Ansprüche 1 bis 7, **dadurch gekennzeichnet, dass** die dachähnlichen Flächen (7) zentrisch zu Heizstäben der elektrischen Grilleinheit (4) ausgerichtet und unter diesen angeordnet sind, wobei sie vorzugsweise mit ihren Firstlinien oder dergleichen Bereichen mit geringem Abstand von dem jeweiligen Heizstab angeordnet sind.

## Claims

1. An electric grill device (2) comprising a reflector tray (1), the grill device including an upper side formed by a grill grate (3) with an electric grill unit (4) or only an electric grill unit (4), and a trough-like reflector tray (1) that is positioned underneath the grill unit (4), the reflector tray (1) including an interior space open toward the grill unit (4) as a water receiving portion and a multiply angled bottom surface as reflectors, wherein the multiply angled bottom surface is formed from roof-like surfaces (7) projecting from the bottom and the roof-like surfaces (7) represent water passage sections (8), so that they communicate with each other at least close to the bottom or also close to a circumferential wall (10) of the reflector tray (1), such that for a reflector tray (1) filled with water, the bottom surface thereof is covered nearly everywhere by water, except for the sections of the roof-like surfaces (7) raising beyond the filled-in amount of water and projecting beyond the water level and forming the actual reflection zones.

2. The grill device (2) of claim 1, **characterized by that** the roof-like surfaces (7) form spaced-apart, mutually parallel ridge lines, and gable surfaces thereof are formed by inclined surfaces in the manner of a hip roof, wherein the foot lines of the roof-like surfaces (7) and of the inclined surfaces of adjacent roof surfaces and/or of the circumferential wall (10) of the reflector tray (1) lie in a common plane spanned by the bottom surface of the reflector tray (1).

3. The grill device (2) of claim 1 or 2, **characterized by that** the reflector tray (1) consists of blank stainless steel or another highly reflective material, in particular metal.

4. The grill device (2) of one of claims 1 to 3, **characterized by that** the reflector tray (1) including the roof-like surfaces (7) is deep-drawn as one piece from sheet steel.

5. The grill device (2) of one of claims 1 to 4, **characterized by that** the roof-like surfaces (7) project in the manner of islands from the bottom plane of the reflector tray (1), and are surrounded on all sides by water passage sections (8) lying in the bottom surface.

6. The grill device (2) of one of claims 1 to 5, **characterized by that** the ridge lines of the roof-like surfaces (7) extend in parallel to a side edge (10) of the substantially rectangular trough shape, the sections (11) close to the edge of the roof-like surfaces (7) steeply extending from the bottom surface, preferably at an angle of close to 90°.

7. The grill device (2) of one of claims 1 to 6, **characterized by that** the roof-like surfaces (7), preferably except for the surfaces (11) close to the edge, extend at an angle of 20° to 35° from the bottom surface.

8. The grill device (2) of one of claims 1 to 7, **characterized by that** the roof-like surfaces (7) are aligned centrally to the heating rods of the electric grill unit (4) and are positioned thereunder, preferably being arranged, with their ridge lines or similar sections, at a small distance to the respective heating rod.

## Revendications

1. Grill (2) pourvu de cuve de réflecteur (1), le grill comportant un côté supérieur réalisé par une grille de grill (3) avec une unité de grill (4) électrique ou seulement une unité de grill (4) électrique, et une cuve de réflecteur (1) de type bac, qui est positionnée au-dessous de l'unité de grill (4), la cuve de réflecteur (1) comportant un volume intérieur ouvert vers l'unité de grill (4) comme logement d'eau et une surface de fond coudée plusieurs fois comme réflecteurs, dans lequel la surface de fond coudée plusieurs fois est réalisée par des surfaces (7) de type toiture s'étendant à partir du fond, et les surfaces (7) de type toiture représentant des sections de passage d'eau (8), de façon qu'elles communiquent les unes avec les autres au moins proche du fond ou aussi proche d'une paroi circonférentielle (10) de la cuve de réflecteur (1), de façon que pour une cuve de réflecteur (1) remplie d'eau, la surface de fond de celle-ci soit recouverte presque partout d'eau, à l'exclusion des sections des surfaces (7) de type toiture se levant sur la quantité d'eau remplie et faisant saillie sur le niveau d'eau et réalisant les zones de réflexion actuelles.

2. Grill (2) selon la revendication 1, **caractérisé en ce que** les surfaces (7) de type toiture forment des lignes de faite espacées, parallèles entre elles, et les surfaces de pignon desquelles sont réalisées par des surfaces en pente à la manière d'un toit en croupe, dans lequel les lignes de pied des surfaces (7) de type toiture et des surfaces en pente de surfaces de toiture voisines et/ou de la paroi circonférentielle (10) de la cuve de réflecteur (1) se trouvent dans un plan commun défini par la surface de fond de la cuve de réflecteur (1).

3. Grill (2) selon la revendication 1 ou 2, **caractérisé en ce que** la cuve de réflecteur (1) consiste en acier inoxydable étiré ou en un autre matériau hautement réfléchissant, en particulier un métal.

4. Grill (2) selon une des revendications 1 à 3, **caractérisé en ce que** la cuve de réflecteur (1) comportant les surfaces (7) de type toiture est emboutie comme une seule pièce à partir de tôle.

5. Grill (2) selon une des revendications 1 à 4, **caractérisé en ce que** les surfaces (7) de type toiture font saillie à la manière d'îles à partir du plan de fond de la cuve de réflecteur (1), et sont entourées sur tous leurs côtés par des sections de passage d'eau (8) agencées dans la surface de fond.

6. Grill (2) selon une des revendications 1 à 5, **caractérisé en ce que** les lignes de faite des surfaces (7) de type toiture s'étendent en parallèle à un bord latéral (10) de la forme de bac essentiellement rectangulaire, dans lequel les sections (11) proche du bord des surfaces (7) de type toiture s'étendent de façon escarpée à partir de la surface de fond, de préférence selon un angle de proche de 90°.

7. Grill (2) selon une des revendications 1 à 6, **caractérisé en ce que** les surfaces (7) de type toiture, de préférence à l'exclusion des surfaces (11) proches du bord, s'étendent selon un angle de 20° à 35° à partir de la surface de fond.

8. Grill (2) selon une des revendications 1 à 7, **caractérisé en ce que** les surfaces (7) de type toiture sont alignées centralement aux cannes chauffantes de l'unité de grill (4) électrique et sont positionnées au-dessous de celles-ci, de préférence étant arrangées, avec leurs lignes de faite ou des sections similaires, à faible distance de la canne chauffante respective.
